# EUROPÄISCHE PATENTSCHRIFT

(11) **EP 1 783 038 B1**
(45) Veröffentlichungstag und Bekanntmachung des Hinweises auf die Patenterteilung: **09.01.2013**
(21) Anmeldenummer: 05023838.5
(22) Anmeldetag: 02.11.2005
(51) Int. Cl.: B62D 29/00, B64C 1/00

(54) **Verfahren zum Versteifen oder Stabilisieren von Hohlprofilen und/oder Hohlkörpern**
Process for reinforcing hollow profiles or parts
Produit pour renfocer un profil ou un corps creux

(43) Veröffentlichungstag der Anmeldung: 09.05.2007
(73) Patentinhaber: INPRO Innovationsgesellschaft für fortgeschrittene Produktionssysteme in der Fahrzeugindustrie mbH, 10587 Berlin (DE)
(72) Erfinder: Gigengack, Thomas, 10785 Berlin (DE); Selahattin, Kaya, 12043 Berlin (DE); Schulenburg, Matthias, 10587 Berlin (DE)
(74) Vertreter: Hoffmann, Klaus-Dieter

(56) Entgegenhaltungen:
- EP-A1- 0 341 330
- DE-A1- 19 937 375
- US-A- 4 695 343

## Beschreibung

Die Erfindung betrifft ein Verfahren zum Versteifen oder Stabilisieren von Hohlprofilen und/oder Hohlkörper gemäß dem Obergegriff der Patentansprüche 1 und 2.

Ein Verfahren der gattungsgemäßen Art gehen aus DE 199 37 375 A1 und US-A- 4 695 343 als bekannt hervor, wobei eine erhebliche Gewichtsreduzierung des zu versteifenden Konstruktionsbauteils angestrebt wird, ohne die hohen Steifigkeitsansprüche zu beeinträchtigen. Hierzu werden in den Innenraum einer Hohlprofilstruktur Versteifungselememte in Form einer Vielzahl einheitlich geformter, insbesondere kugelförmigen Hohlkörpern unterschiedlicher Durchmesser, unterschiedlichen Materials und/oder unterschiedlicher Wandstärke derart eingebracht, dass sie den Querschnitt der Hohlprofilstrukur zumindest auf einen Teilabschnitt ausfüllend aneinanderliegen. Die Hohlkörper werden dann in ihrer in die Hohlprofilstruktur eingebrachten Lage miteinander und mit der Innenwandung der die Hohlkörper aufnehmenden Hohlprofilstruktur mittels zuvor auf die Innenwand und/oder auf die kugelförmigen Hohlkörper aufgebrachten Klebers unlösbar verbunden.

Ausgehend von diesem Stand der Technik hat die vorliegenden Erfindung zum Ziel, ein Verfahren der eingangs genannten Art so zur Verfügung zu stellen, dass die Versteifungs- bzw. Verstärkungsstruktur der Hohlprofile und/oder Hohlkörper kostengünstig, rationell und effektiv herzustellen bzw. gewährleistet ist.

Dieses Ziel wird erfindungsgemäß durch die in den Patentansprüchen 1 und 2 beanspruchten Verfahrensaltenativen erreicht.

Vorteilhafte Weiterbildungen der erfindungsgemäßen Verfahrensalternativen gehen aus den Patentansprüchen 3 bis 13 hervor.

Die erfindungsgemäßen Verfahrensalternativen zum Versteifen oder Stabilisieren von Hohlprofilen und/oder Hohlkörpern lassen sich durch das rationelle funktionelle Zusammenwirken der jeweiligen Verfahrenschritte vorteilhaft in eine Produktionslinie für Fahrzeuge jeder Art integrieren.

Je nach Anforderung können als beliebig und untereinander uneinheitlich geformte Schüttungselemente des losen Schüttgutes zylindrische, konische und/oder pyramidenstumpfförmige _{.} Rohrabschnitte verwendet werden, deren größte Längen- bzw. Höhenabmessung im Bereich von 10% bis 30% der Größe des Innendurchmessers des Hohlprofils bzw. des größten Abstandes zwischen den Innenwänden des Hohlprofils liegt. Abhängig von den gewünschten mechanischen Eigenschaften der Versteifungsstruktur des Hohlprofils und/oder des Hohlkörpers können die die Stützelemente bildenden, beliebig und untereinander uneinheitlich formmäßig zu gestaltenen Schüttungelemente des Schüttgutes aus Leichtmetall, Kunststoff, Kohlenfaserstoff, Papierlaminat, Textilwerkstoff oder Stahl oder einer Mischung der vorgenannten Werkstoffe oder aus diese enthaltenen Recylingstoffen gebildet werden. Eine weitere Beeinflussung der mechanischen Eigenschaften der Versteifungsstruktur des Hohlprofils und/oder des Hohlkörpers ist durch die Auswahl des Klebstoffs im Hinblick auf dessen Viskosität und Fließeigenschaften, die applizierte Klebstoffmenge und die Art der Applikation möglich. Die Schüttungselemente des Schüttgutes können massiv oder hohlförmig ausgebildet werden.

Vorstellbar ist, dass eine bedarfsgerechte Schüttungsdichte des Schüttgutes und damit ein entsprechender Versteifungsgrad des Hohlprofils und/oder des Hohlkörpers durch Modifizierung des Durchmesser und der Länge der Rohrabschnitte, des Verhältnisses von Durchmesser und Länge der Rohrabschnitte, der lokalen Häufung der Rohrabschnitte in dem Hohlprofil und/oder Hohlkörper und der applizierten Klebstoffmenge mittels eines Rechners ermittelt wird.

Hierbei kann die Zufuhr der Schüttungselemente des Schüttgutes aus einem Bunker über ein Rutschensystem erfolgen, das mit einem beweglichen Rutschenarm ausgestattet ist, um eine bessere Verteilung der Schüttungselemente bzw. eine vorbestimmte lokale Häufung der Schüttungselemente des Schüttgutes zwischen den Innenwänden des Hohlprofils und/oder des Hohlkörpers zu gewährleisten.

Die Erfindung wird nun anhand der Zeichnungen weiter erläutert. In diesen sind:
**Fig**. **1** eine perspektivische Vorderansicht eines schematisch dargestellten Hohlprofils mit teilflächiger Klebstoffbeschichtung auf der Innenwänden des Hohlprofils,
**Fig. 2** eine perspektivische Vorderansicht des Hohlprofils ähnlich der Fig. 1, die schematisch die Zuführung der Schüttungselemente des losen Schüttgutes in den Innenraum des Hohlprofils bei gleichzeitiger partieller Applikation eines Klebstoffs auf die Schüttungselemente verdeutlicht,
**Fig. 3** eine perspektivische Vorderansicht des Hohlprofils ähnlich der Fig. 1, aus der die fertiggestellte Hohlprofilversteifung hervorgeht,
**Fig. 4** eine perspektivische Ansicht von oben auf ein schematisch dargestelltes Hohlprofil als Kfz-Achskomponente mit zwei zueinander beabstandeten lokalen Häufungen des verklebten Schüttgutes im Innenraum des Hohlprofils, und
**Fig. 5** eine perspektivische Vorderansicht des Hohlprofils ähnlich der Fig. 3, aus der eine aus unterschiedlich geformten Schüttungselementen des Schüttgutes gebildete Hohlprofilversteifung hervorgeht.

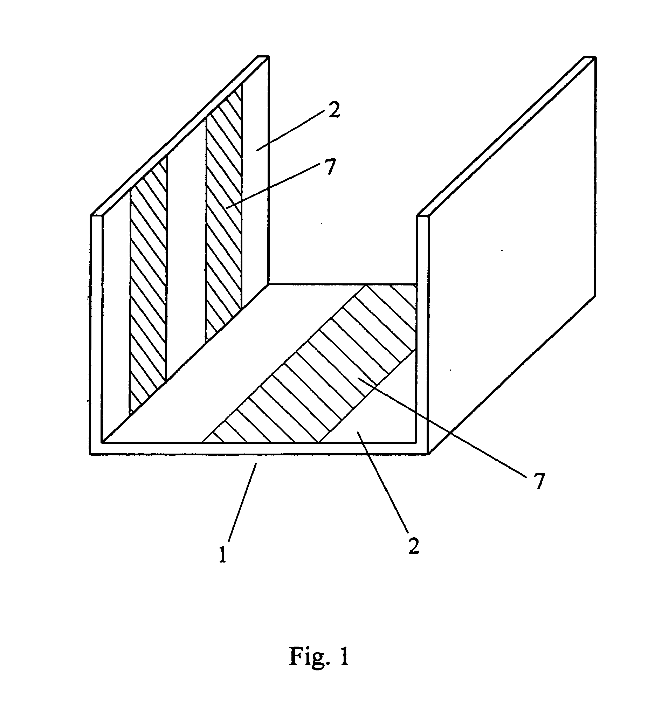

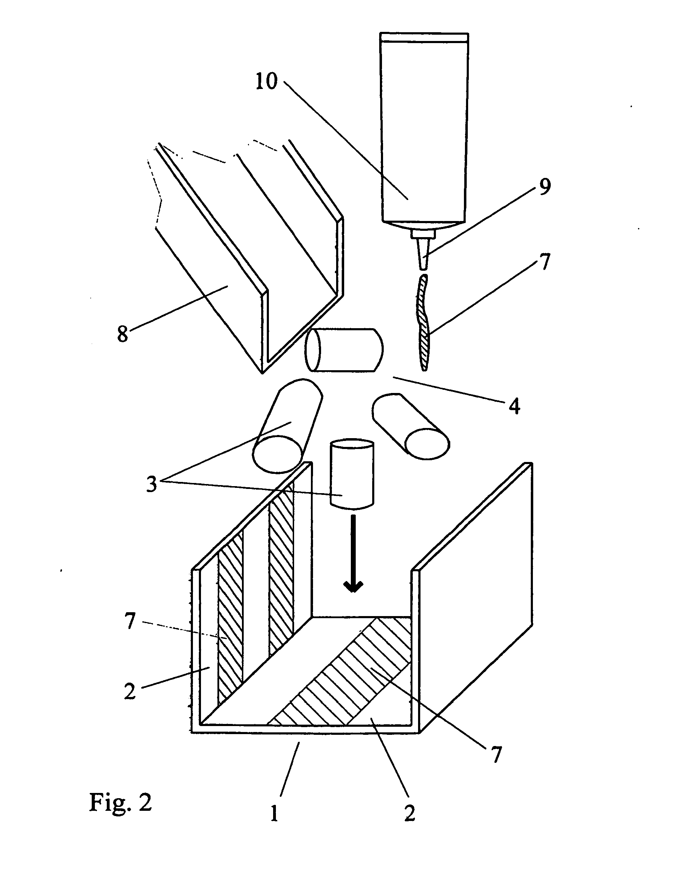

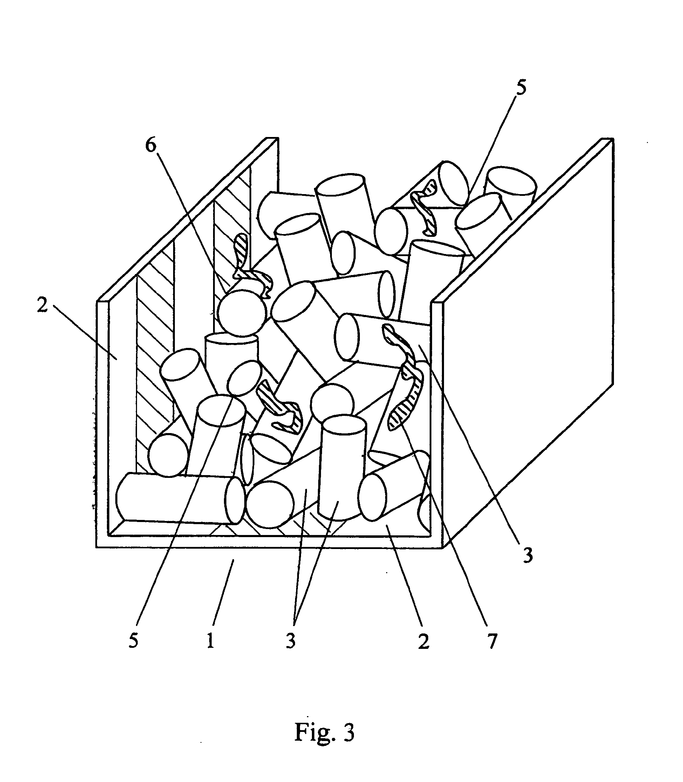

Fig. 1 zeigt ein schematisch dargestelltes Hohlprofil 1 mit Innenwänden 2, auf die teilflächig eine Klebstoffschicht 7 aufgebracht worden ist. In den Innenraum des Hohlprofils 1 wird, wie aus Fig. 2 hervorgeht, ein zuvor hergestelltes loses Schüttgut 4 eingebracht, das aus hohlförmig ausgebildeten und willkürlich zueinander ausgerichteten Schüttungselementen 3 in Form zylindrischer Rohrabschnitten gebildet und in einem nicht dargestellten Bunker gelagert ist. Die Zuführung des losen Schüttgutes 4 in den Innenraum des Hohlprofils 1 erfolgt über eine in Bezug auf das Hohlprofil 1 gesteuert hin und her bewegbare Rutsche 8 eines ebenfalls nicht dargestellten Rutschensystems, das mit dem Bunker in Verbindung steht. Wie Fig. 2 weiterhin schematisch verdeutlicht, wird gleichzeitig mit der Zuführung der Schüttungselemente 3 des Schüttgutes 4 ein Klebstoff 7 mittels einer Düse 9 einer Klebstoffapplikationseinrichtung 10, die in Bezug auf das Hohlprofil 1 ebenfalls gesteuert hin und her bewegbar ist, fadenförmig und partiell auf jedes Schüttungselement 3 des Schüttgutes 4 aufgetragen. Im Laufe dieses Verfahrens werden, wie aus Fig. 3 entnehmbar ist, zum einen die im Schüttgut 4 zueinander benachbarten Schüttungselemente 3 an ihren jeweiligen, infolge der Schüttung willkürlich in dem Schüttgut 4 angeordneten Kontaktflächen 5 durch ihren partiellen Klebstoffauftrag 7 fest miteinander verbunden. Zum anderen werden gleichzeitig die Schüttungselemente 3 des Schüttgutes 4, die bei ihrer Zuführung in den Innenraum des Hohlprofils 1 mit der auf dessen Innenwände 2 teilflächig aufgebrachten Klebstoffschicht 7 in Berührung kommen, an ihre entsprechenden Kontaktflächen 6 mit den Innenwänden 2 des Hohlprofils 1 durch die Klebstoffschicht 7 fest verbunden. Auf diese Weise wird die angestrebte Versteifungsstruktur des Hohlprofils 1 gebildet, in der die willkürlich zueinander ausgerichteten, partiell miteinander verklebten Schüttungselemente 3 die Stützelemente des mit den Innenwänden 2 des Hohlprofils 1 fest verbundenen, nunmehr in sich verklebten Schüttgutes 2 darstellen.

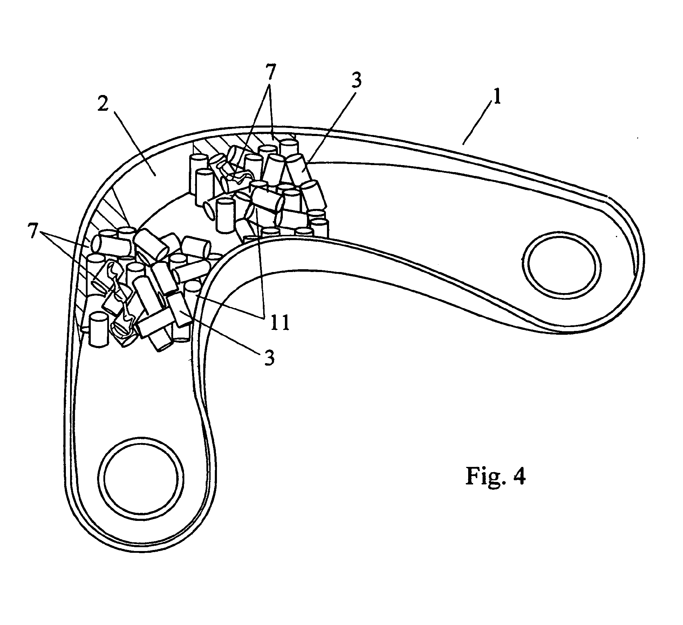

Aus Fig. 4 geht eine Ausführungsform einer Versteifungsstruktur bei einem Hohlprofil 1 in Form einer Kfz-Achskomponente hervor. Hier sind in den Innenraum des Hohlprofils 1 zueinander beabstandet eingebrachte lokale Häufungen 11 der Versteifungsstruktur gemäß Fig. 3 durch die Klebstoffschichten 7, die beabstandet zueinander teilflächig auf die Innenwände 2 des Hohlprofils 1 aufgebracht sind, mit den Innenwänden 2 des Hohlprofils 1 fest verbunden und sorgen somit für die angestrebte Versteifung des Hohlprofils 1.

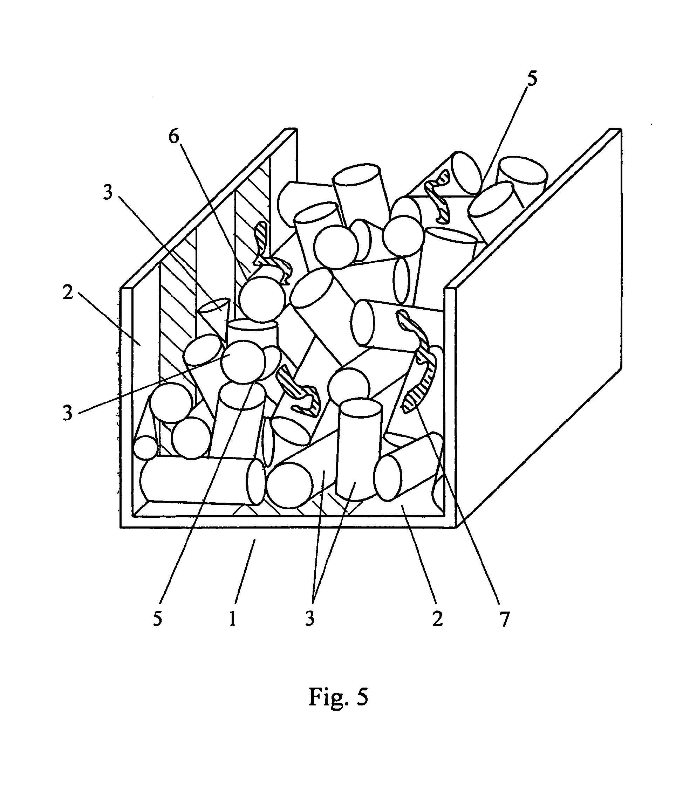

Aus Fig. 5 geht eine fertiggestellte Hohlprofilversteifung ähnlich der Fig. 3 hervor, bei der die die Stützelemente bildenden Schüttungselemente 3 des Schüttgutes 4 zylindrisch, konisch und kugelförmig ausgebildet sind.

### Liste der Bezugszeichen:

- 1: Hohlprofil, Hohlkörper
- 2: Innenwände
- 3: Schüttungselemente, Stützelemente
- 4: Schüttgut
- 5: Kontaktflächen der partiell verklebten Schüttungselemente
- 6: Kontaktflächen der Schüttungselemente mit den Innenwänden des Hohlprofils
- 7: Klebstoff, Klebstoffschicht, Klebstoffauftrag
- 8: Rutsche
- 9: Düse
- 10: Klebstoffapplikationseinrichtung
- 11: lokale Häufungen

## Patentansprüche

1. Verfahren zum Versteifen oder Stabilisieren von Hohlprofilen und/oder Hohlkörpern (1), insbesondere eines für Straßen-, Wasser-, Luft-, Raum- oder Schienenfahrzeugen verwendeten Hohlprofils, zwischen dessen Innenwänden Stützelemente angeordnet und miteinander sowie mit den Innenwänden des Hohlprofils zu dessen Versteifung verbunden werden,
- bei dem zunächst ein loses Schüttgut aus die Stützelemente bildenden und willkürlich zueinander ausgerichteten Schüttungselementenhergestellt wird,
- mindestens teilflächig eine Klebstoffschicht auf die Innenwände des Hohlprofils appliziert wird,
- die willkürlich zueinander ausgerichteten Schüttungselemente des Schüttgutes mindestens partiell mit einem Klebstoff beschichtet und
- auf die mit der Klebstoffschicht mindestens teilflächig beschichteten Innenwände (2) des Hohlprofils zugeführt werden,
- wobei die im Schüttgut zueinander benachbarten Schüttungselemente (3) zumindest teilflächig miteinander und die Schüttungselemente des Schüttgutes, die mit den mit der Klebstoffschicht mindestens teilflächig beschichteten Innenwänden des Hohlprofils in Kontakt kommen, an ihren entsprechenden Kontaktflächen mit den Innenwänden des Hohlprofils fest verklebt werden und die Hohlprofilversteifung somit hergestellt wird.
**dadurch gekennzeichnet, dass**
das lose Schüttgut aus beliebig und untereinander uneinheitlich geformten Schüttungselementen gebildet wird und die partielle Beschichtung der Schüttungselemente (13) Schüttgutes durch kontinuierliche fadeförmige Klebstoffapplikation (7) in einem vorgegeben Muster mittels einer von einem Roboterarm hin und her bewegten Runddüse unter gleichzeitiger zwangsweiser Mischung der Schüttungselemente und gleichzeitiger Zuführung des losen Schüttgutes in das Hohlprofil und Applikation des Klebstoffs auf die Schüttungselemente des losen zugeführten Schüttguts (4) erfolgt.

2. Verfahren zum Versteifen oder Stabilisieren von Hohlprofilen und/oder Hohlkörpern (1) insbesondere eines für Straßen- Wasser-, Luft-, Raum- oder Schienenfahrzeuge verwendeten Hohlprofils, zwischen dessen Innenwänden Stützelemente angeordnet und miteinander sowie mit den Innenwänden des Hohlprofils zu dessen Versteifung verbunden werden, bei dem
- zunächst ein loses Schüttgut aus die Stützelemente bildenden und willkürlich zueinander ausgerichteten Schüttungselementen hergestellt wird,
- mindestens teilflächig eine Klebstoffschicht auf die Innenwände des Hohlprofils appliziert wird,
- die willkürlich zueinander ausgerichteten Schüttungselemente des Schüttgutes mindestens partiell mit einem Klebstoff beschichtet und
- auf die mit der Klebstoffschicht mindestens teilflächig beschichteten Innenwände (2) des Hohlprofils zugeführt werden,
- wobei die im Schüttgut zueinander benachbarten Schüttungselemente (3) zumindest teilflächig miteinander und die Schüttungselemente des Schüttgutes, die mit den mit der Klebstoffschicht mindestens teilflächig beschichteten Innenwänden des Hohlprofils in Kontakt kommen, an ihren entsprechenden Kontaktflächen mit den Innenwänden des Hohlprofils fest verklebt werden und die Hohlprofilversteifung somit hergestellt wird,
**dadurch gekennzeichnet, dass**
das lose Schüttgut aus beliebig und untereinander uneinheitlich geformten Schüttungselementen gebildet wird und die partielle Beschichtung der Schüttungselemente des Schüttgutes und die mindestens teilflächige Beschichtung der Innenwände (2) des Hohlprofils mit Klebstoff durch fadenförmige Applikation des Klebstoffs (7) mittels einer Exzenterdüse unter gleichzeitiger zwangsweiser Mischung der Schüttungselemente und gleichzeitiger Zufuhrung des losen Schüttgutes in das Hohlprofil und Applikation des Klebstoffs auf die Schüttungselemente (3) des losen zugeführten Schüttguts erfolgt, wobei die Exzenterdüse mit unterschiedlicher Geschwindigkeit rotiert und einen ringförmigen Klebstofffaden auf den entsprechenden Flächen der Innenwänden des Hohlprofils und auf dem in das Hohlprofil zugeführten Schüttgut (4) ablegt.

3. Verfahren nach einem der vorhergehenden Ansprüche, **dadurch gekennzeichnet, dass** die Schüttungselemente des Schüttgutes zylindrisch, konisch und/oder pyramidenstumpfförmig ausgebildet werden.

4. Verfahren nach einem der vorhergehenden Ansprüche, **dadurch gekennzeichnet, daß** das lose Schüttgut kontinuierlich in das Hohlprofil zugeführt und stetig in diesem angeordnet wird.

5. Verfahren einem der vorhergehenden Ansprüche 1 bis 3, **dadurch gekennzeichnet, daß** das lose Schüttgut schubweise in das Hohlprofil zugeführt und portionsweise in diesem angeordnet wird.

6. Verfahren nach einem der vorhergehenden Ansprüche, **dadurch gekennzeichnet, daß** als Schüttungselemente des losen Schüttgutes beliebig geformte Rohrabschnitte verwendet werden, deren größte Längenabmessung im Bereich von 10 bis 30% der Größe des Innendurchmessers des Hohlprofils bzw. des größten Abstandes zwischen den Innenwänden des Hohlprofils liegt.

7. Verfahren nach Anspruch 6, **dadurch gekennzeichnet, daß** der Durchmesser und die Länge der Rohrabschnitte im Bereich von 4 bis 30 mm bzw. 10 bis 100 mm gewählt werden.

8. Verfahren nach Anspruch 1 bis 7, **dadurch gekennzeichnet, daß** die die Stützelemente bildenden Schüttungselemente des Schüttgutes als zylindrische, konische und/ oder pyramidenstumpfförmige Rohrabschnitte ausgebildet werden, deren größte Längen- bzw. Höhenabmessung im Bereich von 10% bis 30% der Größe des Innendurchmessers des Hohlprofils bzw. des größetn Abstandes zwischen den Innenwänden des Hohlprofils liegt.

9. Verfahren nach einem der Ansprüche 1 bis 8, **dadurch gekennzeichnet, dass** die die Stützelemente bildenden Schüttungelemente des Schüttgutes aus Leichtmetall, Kunststoff, Koh-lenfaserstoff, Papierlaminat, Textilwerkstoff oder Stahl oder einer Mischung der vorgenannten Werkstoffe oder aus diese enthaltenden Recyclingstoffen gebildet werden.

10. Verfahren nach einem der vorhergehenden Ansprüche, **dadurch gekennzeichnet, dass** die Schüttungselemente des Schüttgutes massiv ausgebildet werden.

11. Verfahren nach einem der Ansprüche 1 bis 10, **dadurch gekennzeichnet, dass** die Schüttungselemente hohlförmig ausgebildet sind.

12. Verfahren nach einem der vorhergehenden Ansprüche, **dadurch gekennzeichnet, dass** ein Ein- und/oder ein Zweikomponentenklebstoff verwendet wird.

13. Verfahren nach einem der vorhergehenden Ansprüche, **dadurch gekennzeichnet, dass** die Zufuhrung des losen Schüttguts in das Hohlprofil mittels eines beweglichen Rutschenarms einer mit einem Schüttgutbunker verbundenen Rutscheneinrichtung unter Bildung zueinander lokal beabstandeter Häufungen der Stützelementenstruktur in dem Innenraum des Hohlprofils gesteuert erfolgt.

## Claims

1. A method for stiffening or stabilising hollow profiles and/or hollow bodies (1), in particular a hollow profile used for road vehicles, watercraft, aircraft, space vehicles or rail-bound vehicles, between the inner walls whereof support units are disposed and connected to one another as well as to the inner walls of the hollow profile for the stiffening thereof,
- wherein a loose bulk material is first produced from bulk units forming the support units and orientated arbitrarily with respect to one another,
- an adhesive layer is applied at least partially on the inner walls of the hollow profile,
- the bulk units of the bulk material orientated arbitrarily with respect to one another are coated at least partially with an adhesive and
- are fed onto the inner walls (2) of the hollow profile coated at least partially with the adhesive layer,
- wherein the bulk units (3) adjacent to one another in the bulk material become at least partially stuck firmly to one another and the bulk units of the bulk material coming into contact with the inner walls of the hollow profile at least partially coated with the adhesive layer become firmly stuck at their corresponding contact faces to the inner walls of the hollow profile and the hollow profile stiffening is thus produced,
**characterised in that**
the loose bulk material is formed from bulk units shaped arbitrarily and non-uniformly with respect to one another and the partial coating of the bulk units (3) of the bulk material takes place by continuous thread-like adhesive application (7) in a predetermined pattern by means of a round nozzle moved back and forth by a robot arm with simultaneous forced mixing of the bulk units and simultaneous feeding of loose bulk material into the hollow profile and application of the adhesive onto the bulk units of the fed loose bulk material (4).

2. A method for stiffening or stabilising hollow profiles and/or hollow bodies (1), in particular a hollow profile used for road vehicles, watercraft, aircraft, space vehicles or rail-bound vehicles, between the inner walls whereof support units are disposed and connected to one another as well as to the inner walls of the hollow profile for the stiffening thereof, wherein
- a loose bulk material is first produced from bulk units forming the support units and orientated arbitrarily with respect to one another,
- an adhesive layer is applied at least partially on the inner walls of the hollow profile,
- the bulk units of the bulk material orientated arbitrarily with respect to one another are coated at least partially with an adhesive and
- are fed onto the inner walls (2) of the hollow profile coated at least partially with the adhesive layer,
- wherein the bulk units (3) adjacent to one another in the bulk material become at least partially stuck firmly to one another and the bulk units of the bulk material coming into contact with the inner walls of the hollow profile at least partially coated with the adhesive layer become firmly stuck at their corresponding contact faces to the inner walls of the hollow profile and the hollow profile stiffening is thus produced,
**characterised in that**
the loose bulk material is formed from bulk units shaped arbitrarily and non-uniformly with respect to one another and the partial coating of the bulk units of the bulk material and the at least partial coating of the inner walls (2) of the hollow profile takes place with adhesive by thread-like application of the adhesive (7) by means of an eccentric nozzle with simultaneous forced mixing of the bulk units and simultaneous feeding of the loose bulk material into the hollow profile and application of the adhesive onto the bulk units (3) of the fed loose bulk material (4), wherein the eccentric nozzle rotates at a variable speed and deposits an annular adhesive thread on the corresponding surfaces of the inner walls of the hollow profile and on the bulk material (4) fed into the hollow profile.

3. The method according to any one of the preceding claims, **characterised in that** the bulk units of the bulk material are constituted cylindrical, conical and/or truncated-pyramid-shaped.

4. The method according to any one of the preceding claims, **characterised in that** the loose bulk material is fed continuously into the hollow profile and is disposed constantly in the latter.

5. The method according to any one of preceding claims 1 to 3, **characterised in that** the loose bulk material is fed in batches into the hollow profile and is disposed portion by portion in the latter.

6. The method according to any one of the preceding claims, **characterised in that**, as bulk units of the loose bulk material, use is made of arbitrarily shaped pipe sections, the greatest length dimension whereof lies in the range from 10 to 30% of the size of the inner diameter of the hollow profile or of the greatest distance between the inner walls of the hollow profile.

7. The method according to claim 6, **characterised in that** the diameter and the length of the pipe sections is selected in the range from 4 to 30 mm and 10 to 100 mm respectively.

8. The method according to claim 1 to 7, **characterised in that** the bulk units of the bulk material forming the support units are constituted as cylindrical, conical and/or truncated-pyramid-shaped pipe sections, the greatest length and height dimension whereof lies in the range from 10% to 30% of the size of the inner diameter of the hollow profile or the greatest distance between the inner walls of the hollow profile.

9. The method according to any one of claims 1 to 8, **characterised in that** the bulk units of the bulk material forming the support units are formed by light metal, plastic, carbon fibre material, paper laminate, textile material or steel or a mixture of the aforementioned materials or recycling materials containing the latter.

10. The method according to any one of the preceding claims, **characterised in that** the bulk units of the bulk material are constituted solid.

11. The method according to any one of claims 1 to 10, **characterised in that** the bulk units are constituted hollow.

12. The method according to any one of the preceding claims, **characterised in that** a one- and/or two-component adhesive is used.

13. The method according to any one of the preceding claims, **characterised in that** the feeding of the loose bulk material into the hollow profile takes place in a controlled manner by means of a mobile sliding arm of a sliding device connected to a bulk material bunker with the formation of accumulations of the support unit structure locally spaced apart from one another in the interior of the hollow profile.

## Revendications

1. Procédé pour la rigidification ou la stabilisation de profilés creux et/ou de corps creux (1), en particulier d'un profilé creux utilisé dans un véhicule routier, marin, aérien ou ferroviaire, entre les parois intérieures duquel sont disposés des éléments d'appui reliés entre eux ainsi qu'aux parois intérieures du profilé creux, pour la rigidification de celui-ci,
- dans lequel un produit en vrac est tout d'abord fabriqué à partir d'éléments en vrac orientés arbitrairement les uns vers les autres et formant les éléments d'appui,
- une couche de colle est appliquée au moins sur des parties de surface des parois intérieures du profilé creux,
- les éléments en vrac du produit en vrac, orientés arbitrairement les uns vers les autres, sont au moins partiellement recouverts de colle, et
- sont guidés vers les parois intérieures (2) du profilé creux recouvertes de la couche de colle, au moins sur des parties de surface,
- dans lequel les éléments en vrac (3) adjacents dans le produit en vrac sont collés les uns aux autres, au moins sur des parties de surface, et les éléments en vrac du produit en vrac touchant les parois intérieures du profilé creux au moins partiellement recouvertes de la couche de colle sont collés aux parois intérieures du profilé creux par leurs surfaces de contact correspondantes, permettant ainsi de réaliser la rigidification du profilé creux,
**caractérisé en ce que**
le produit en vrac est constitué à partir d'éléments en vrac formés au choix, de façon non homogène entre eux, et le revêtement partiel des éléments en vrac (3) du produit en vrac est réalisé par application continue d'une colle, en forme de ligne avec un motif prédéfini, au moyen d'une buse ronde déplacée en va-et-vient par un bras de robot, en mélangeant simultanément les éléments en vrac, tout en alimentant le produit en vrac dans le profilé creux et en appliquant la colle sur les éléments en vrac du produit en vrac (4) alimenté.

2. Procédé pour la rigidification ou la stabilisation de profilés creux et/ou de corps creux (1) en particulier d'un profilé creux utilisé dans un véhicule routier, marin, aérien ou ferroviaire, entre les parois intérieures duquel sont disposés des éléments d'appui reliés entre eux ainsi qu'aux parois intérieures du profilé creux, pour la rigidification de celui-ci,
- dans lequel un produit en vrac est tout d'abord fabriqué à partir d'éléments en vrac orientés arbitrairement les uns vers les autres et formant les éléments d'appui,
- une couche de colle est appliquée au moins sur des parties de surface des parois intérieures du profilé creux,
- les éléments en vrac du produit en vrac, orientés arbitrairement les uns vers les autres, sont au moins partiellement recouverts de colle, et
- sont guidés vers les parois intérieures (2) du profilé creux recouvertes de la couche de colle, au moins sur des parties de surface,
dans lequel les éléments en vrac (3) adjacents dans le produit en vrac sont collés les uns aux autres, au moins sur des parties de surface, et les éléments en vrac du produit en vrac touchant les parois intérieures du profilé creux au moins partiellement recouvertes de la couche de colle sont collés aux parois intérieures du profilé creux par leurs surfaces de contact correspondantes, permettant ainsi de réaliser la rigidification du profilé creux,
**caractérisé en ce que**
le produit en vrac est constitué à partir d'éléments en vrac formés au choix, de façon non homogène entre eux, et le revêtement partiel des éléments en vrac du produit en vrac, ainsi que le revêtement au moins sur des parties de surface des parois intérieures (2) du profilé creux avec une colle, sont réalisés par application d'une colle (7), en forme de ligne, au moyen d'une buse excentrique, en mélangeant simultanément les éléments en vrac, tout en alimentant le produit en vrac dans le profilé creux et en appliquant la colle sur les éléments en vrac (3) du produit en vrac alimenté, où la buse excentrique tourne à une vitesse variable et dépose un fil de colle annulaire sur les surfaces correspondantes des parois intérieures du profilé creux et sur le produit en vrac (4) alimenté dans le profilé creux.

3. Procédé selon l'une des revendications précédentes, **caractérisé en ce que** les éléments en vrac du produit en vrac sont conçus cylindriques, coniques et/ou en forme de pyramide tronquée.

4. Procédé selon l'une des revendications précédentes, **caractérisé en ce que** le produit en vrac est alimenté en continu dans le profilé creux et disposé dans celui-ci en continu.

5. Procédé selon l'une des revendications précédentes 1 à 3, **caractérisé en ce que** le produit en vrac est alimenté par lots dans le profilé creux et disposé dans celui-ci par portions.

6. Procédé selon l'une des revendications précédentes, **caractérisé en ce que** pour former les éléments en vrac du produit en vrac, on utilise des sections de tube de la forme souhaitée, dont la plus grande dimension en longueur mesure 10 à 30% de la taille du diamètre intérieur du profilé creux, ou du plus grand espacement entre les parois intérieures du profilé creux.

7. Procédé selon la revendication 6, **caractérisé en ce que** le diamètre et la longueur des sections de tube sont choisis dans une plage entre 4 et 30 mm, ou entre 10 et 100 mm.

8. Procédé selon la revendication 1 à 7, **caractérisé en ce que** les éléments en vrac du produit en vrac formant les éléments d'appui sont conçus comme des sections de tube cylindriques, coniques et/ou en forme de pyramide tronquée, dont la plus grande dimension en longueur ou en hauteur mesure de 10 à 30% de la taille du diamètre intérieur du profilé creux, ou du plus grand espacement entre les parois intérieures du profilé creux.

9. Procédé selon l'une des revendications 1 à 8, **caractérisé en ce que** les éléments en vrac du produit en vrac formant les éléments d'appui sont conçus en métal léger, en matière synthétique, en fibres de carbone, en papier laminé, en matière textile ou en acier, ou à partir d'un mélange des matériaux précités, ou encore de matières recyclées à partir de ceux-ci.

10. Procédé selon l'une des revendications précédentes, **caractérisé en ce que** les éléments en vrac du produit en vrac sont conçus massifs.

11. Procédé selon l'une des revendications 1 à 10, **caractérisé en ce que** les éléments en vrac sont conçus creux.

12. Procédé selon l'une des revendications précédentes, **caractérisé en ce que** la colle utilisée comprend un et/ou deux composants.

13. Procédé selon l'une des revendications précédentes, **caractérisé en ce que** l'alimentation du produit en vrac dans le profilé creux est réalisée au moyen d'un bras de glissière mobile d'un dispositif à glissière relié à un bunker de produit en vrac, en formant des tas espacés composés de la structure des éléments d'appui, dans l'espace intérieur du profilé creux, de façon commandée.
